# EUROPÄISCHE PATENTSCHRIFT

(11) **EP 0 867 374 B1**
(45) Veröffentlichungstag und Bekanntmachung des Hinweises auf die Patenterteilung: **25.07.2001**
(21) Anmeldenummer: 98810239.8
(22) Anmeldetag: 19.03.1998
(51) Int. Cl.: B65D 35/10, B65D 35/22, B29D 23/20, B29C 45/14, B29C 31/00

(54) **Verfahren zur Herstellung einer Mehrkammer-Verpackungstube**
Process to produce a multicompartment tube container
Procédé pour fabriquer un tube d'emballage à plusieurs chambres

(30) Priorität: 26.03.1997 DE 19712736
(43) Veröffentlichungstag der Anmeldung: 30.09.1998
(73) Patentinhaber: KMK LIZENCE LTD., Chaussée, Port Louis (MU)
(72) Erfinder: Scheifele, Fredy, 8340 Hinwil (CH)
(74) Vertreter: Peege, Klaus

(56) Entgegenhaltungen:
- EP-A- 0 677 374
- US-A- 2 673 374
- US-A- 3 290 422
- US-A- 3 991 294
- US-A- 4 964 539
- US-A- 5 076 470

## Beschreibung

Bekannt ist ein Verfahren, bei dem ein vorgefertigtes Tubenrohr mit einem gleichermassen vorgefertigten Tubenkopf verbunden wird. Anschliessend wird eine faltenförmig ausgebildete in ihrer Längs- und Querrichtung federnde Trennwand in das Tubenrohr eingeschoben. Wahlweise wird die Trennwand, d.h. eine ihrer Querseiten mit dem Tubenkopf durch Kleben verbunden, während die andere Querseite mit der Verschlussnaht der Tube vereinigt wird. Durch die der Trennwand inhärenten quer- und längswirkenden Federkräfte verspannt sich die Trennwand mit ihren Längsseiten gegen das Innere des Tubenrohres und, sofern keine Verklebung am Inneren des Tubenkopfes vorgesehen ist, zwischen Verschlussnaht und Tubenkopf.

Bei diesem Verfahren wird die Trennwand in das Innere einer vorgefertigten Tube montiert, eine Verfahrensweise, die nur schwierig zu automatisieren ist.

Ein weiteres Verfahren kennzeichnet sich dadurch, dass ein vorgefertigter Kopf mit einer Trennwand versehen wird - dies erfolgt vermittels mechanischer Mittel, die die Trennwand mit dem Kopf verbinden - woraufhin Trennwand mit Kopf in ein Tubenrohr soweit eingebracht wird, dass der Kopf mit dem Tubenrohr in bekannter Weise - Verschweissung von Tubenkopf und Tubenrohr entlang dem äusseren Umfang des Kopfes - verbunden werden kann.

Bei diesem Verfahren ist im Vergleich zum erstgenannten Verfahren die Einbringung der Trennwand in den Tubenkörper vereinfacht, dies jedoch um den Preis der vorgängigen Vereinigung von Trennwand und Kopf, die einen zur Anzahl der Verfahrensschritte erstgenannten Verfahrens einen zusätzlichen Verfahrensschritt darstellt, der seinerseits wiederum schwer automatisierbar ist.

Bekannt ist ferner ein Verfahren zur Herstellung einer Mehrkammertube, die aus einer äusseren und einer in der äusseren angeordneten inneren Tube besteht. Die zwei Tubenrohre sind über einen angespritzten Kopf konzentrisch beabstandet zueinander gehaltert. Das Verfahren zur Herstellung der Mehrkammertube setzt die Beschickung zweier Dorne mit Tubenrohren auf ihren jeweiligen äusseren Umfängen voraus, wobei für den Spritzvorgang die Dorne mit Tubenrohren ineinanderzufahren sind. Hinzutritt, dass das bekannte Verfahren nur dann zu funktionsfähigen Mehrkammertuben führt, wenn eine separat zu fertigende Mischkammer, als Ausguss des Kopfes wirkend, im Kopf und der inneren Tube im Rahmen des bekannten Verfahrens zur Montage gelangt (US 5.076.470).

Weiter bekannt ist ein Verfahren zur Herstellung einer Mehrkammertube mit einer die Tube längs und quer durchgreifenden Trennwand. Der Kopf der Tube wird an das Tubenrohr durch Spritzgiessen angeformt. Der dazu notwendige Dorn als Teil der Spritzgiessform ist geschlitzt, so dass mit Bildung des Kopfes gleichzeitig auch die Trennwand gebildet wird. Bei diesem Verfahren führt die Entladung der Tube vom Dorn auf Grund des relativ langen Ausstossweges zu einem nicht tragbaren Anteil von Ausschuss.

Nachteil der bekannten Verfahren ist, dass mit ihnen vorgefertigte Tubenbestandteile zusammengeführt werden, es sich also grundsätzlich um Montageverfahren handelt, denen komplex automatisierte Verfahrensschritte verfahrensökonomische, beispielsweise Ausbringung an Tuben pro Zeiteinheit, enge Grenzen ziehen, insbesondere dann, wenn die Montageverfahren zusätzlich Verbindungsvorgänge durch Ankleben oder Aufschmelzen umschliessen.

Hiervon ausgehend liegt der Erfindung die Aufgabe zugrunde, ein Verfahren zur Herstellung von Mehrkammertuben zu schaffen, mit dem die Nachteile der bekannten Verfahren vermieden werden, und diese Aufgabe wird durch ein Verfahren mit den Merkmalen des Patentanspruches 1 gelöst.

Zur Lösung der Aufgabe geht die Erfindung von einem sogenannten Kopfanform-Verfahren aus. Bei einem Kopfanform-Verfahren zur Herstellung von Verpackungstuben, bestehend aus Tubenrohr und Tubenkopf, handelt es sich um ein Verfahren, bei dem ein vorgefertigtes Tubenrohr mit einem Tubenkopf verbunden wird, während letzterer gebildet, d.h. ausgeformt wird. Das Kopfanform-Verfahren wird in zwei Varianten unterteilt, die sich nach der Technik bestimmen, wie der Kopf aus einem Kunststoff gebildet

wird. So wird zwischen einem Spritzgiess-Verfahren und einem Pressform-Verfahren unterschieden. Beide Verfahren arbeiten mit einer Form bestehend aus zwei Formhälften, im speziellen Fall der Tubenfertigung Matrize und Dorn genannt, die zur Bildung eines Kopfes mit Kunststoffen beschickt werden. Im Falle des Spritzgiessens wird eine geschlossene Form (Dorn in Matrize eingefahren) mit einem flüssigen Kunststoff beschickt, während beim Pressformen eine offene Matrize mit einer Portion plastifizierten Kunststoffes befüllt und anschliessend der Dorn eingefahren wird. Während des Einfahrens formt der Dorn die Materialportion zu einem Kopf um. Da bei beiden Verfahrensvarianten die Dorne auf ihrem Umfang das Tubenrohr tragen, werden diese an die Köpfe während ihrer Bildung angeformt. Beide Verfahrensvarianten sind zu einem hohen technischen Stand entwickelt und kennzeichnen sich durch die Ausbringung hoher Tubenstückzahlen pro Zeiteinheit. Zur Lösung der erfindungsgemässen Aufgabe wendet sich die Erfindung einerseits von bekannten Montageverfahren ab und andererseits den gleichermassen bekannten Kopfanform-Verfahren zu und bildet letztere jedoch dahingehend weiter, indem sie vorschreibt, den Dorn bestückt mit Tubenrohr und Trennwand zur Bildung einer mehrteiligen Tube als eine Formhälfte einer Spritzoder Pressform zur Anwendung zu bringen. Bei den verfügbaren Beschickungstechniken kann eine Verlängerung der Beschickungszeit des Dornes mit einem Rohr im Vergleich zu der mit einem Rohr und einer Trennwand in engen Grenzen gehalten werden, so dass die hohe Fertigungseffizienz der Kopfanform-Verfahren im wesentlichen nicht beeinträchtigt wird. Das erfindungsgemässe Verfahren bietet den Vorteil, dass ein in den Kopf verlaufendes Ende der Trennwand bei Bildung des Kopfes sich mit letzterem von selbst verbindet, was für sich gesehen bereits eine wesentliche Vereinfachung der Herstellung einer Mehrkammertube darstellt.

Anhand der eine Vorrichtung darstellenden Zeichnung wird ein Ausführungsbeispiel des Erfindungsgegenstandes näher erläutert. Es zeigen:
- Fig. 1:: eine Pressformmaschine in der Draufsicht mit auf einem Drehtisch angeordneten Werkzeugen jeweils acht Schrittstellungen durchlaufend.
- Fig. 2:: den Drehtisch mit einem der Werkzeuge teilweise im Schnitt in Schrittstellung 1 vor Beschickung des Dornes des Werkzeuges mit einem Tubenrohr und einer Trennwand.
- Fig. 3:: den Drehtisch mit einem der Werkzeuge teilweise im Schnitt in Schrittstellung 1 nach Beschickung des Dornes des Werkzeuges mit einem Tubenrohr und einer Trennwand.
- Fig. 4:: den Drehtisch mit einem der Werkzeuge teilweise im Schnitt in Schrittstellung 2 mit beschicktem Dorn und nach oben offener Matrize unterhalb einer Befüllvorrichtung (Extruder).
- Fig. 5:: den Drehtisch mit einem der Werkzeuge teilweise im Schnitt in Schrittstellung 3 mit um 90° zur Horizontalen geschwenktem Dorn vor Einfahren in die nach oben offene mit einer Materialportion (nicht dargestellt). befüllten Matrize.
- Fig. 6:: eine Trennwand in der Draufsicht.

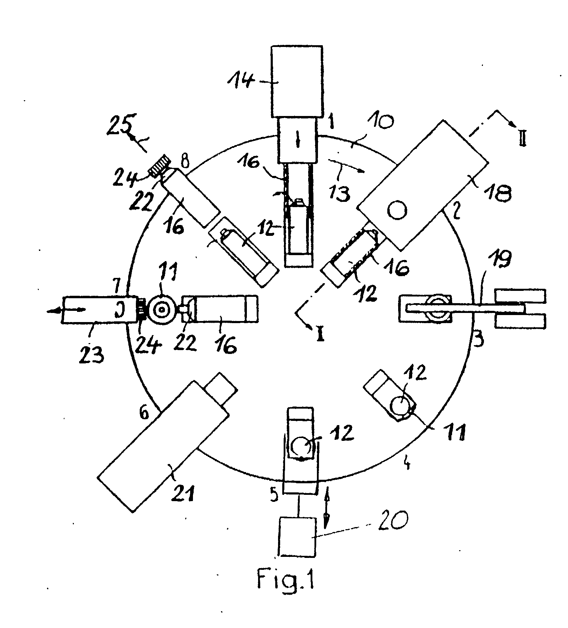

Fig. 1 zeigt den als Drehtisch 10 ausgebildeten Drehkörper in der Draufsicht. Auf dem Drehtisch 10 sind in Umfangsrichtung in gleichmässigen Abständen Matrizen 11 und Dorne 12 angeordnet, wobei jeder Matrize 11 ein Dorn 12 zugeordnet ist. Die Matrizen 11 sind nach oben gerichtet offen und die Dorne 12 sind aus einer horizontalen Lage um einen Winkel von 90° in eine zu den jeweiligen Matrizen 11 gleichachsige vertikale Lage auf dem Drehtisch 10 schwenkbar angeordnet. In der gleichachsigen Lage sind die Dorne 12 axial verschiebbar, um die zugeordnete Matrize 11 schliessen und wieder öffnen zu können. Mit den Ziffern 1 bis 8 sind in der Fig. 1 beispielsweise acht Schrittstellungen angegeben, wobei der Drehtisch 10 um jeweils eine Schrittstellung in Pfeilrichtung 13 durch nicht dargestellte Mittel antreibbar ist.

Nachfolgend werden die acht Schrittstellungen, denen jeweils eine Station zugeordnet ist, im einzelnen beschrieben.

### Station 1

Durch eine Ladevorrichtung 14 wird der Dorn 12 zuerst mit einer Trennwand 15 und anschliessend mit einem vorgefertigten Tubenrohr 16 beschickt. Dabei wird die Trennwand 15 in einem Schlitz 17 des Dornes 12 aufgenommen, wobei deren Flansche 45 an dem Dorn angeformt anliegen, so dass das Tubenrohr 16 über den Dorn 12 und die Flansche 45, letztere enganliegend überfahrend, geschoben werden kann. Enganliegend bedeutet einen Abstand zwischen Flansch 45 und innerer Oberfläche des Dornes von 0,05 mm bis 1.0 mm, vorzugsweise 0,4 bis 0,8 mm. Bei der Beschickung befindet sich der Dorn 12 in einer horizontalen Lage, so dass die Beschickung in horizontaler Richtung erfolgt.

### Station 2

Der Station 2 ist ein feststehender Materialgeber 18 zugeordnet. Durch diesen Materialgeber 14 wird eine Portion (nicht dargestellt) plastifizierten Kunststoffes in die durch den Materialgeber 18 überdeckte nach oben offene Matrize 11 im freien Fall eingebracht. Eine andere Art der Beschickung kann darin bestehen, die Materialportion auf einen die Matrize in ihrer Längsrichtung durchfahrenden Materialträger aufzubringen, der die Materialportion in die für sie bestimmte Position in der Matrize bringt. Die Lage der Matrize 11 ist in Stellung 7 verdeutlicht. Beim Weiterschalten von Stellung 2 auf Stellung 3 wird der Dorn 12 in die zur Matrize gleichachsige vertikale Lage geschwenkt.

### Station 3

Durch einen dieser Station 3 zugeordneten Kniehebel oder ein anderes Verriegelungsmittel 19 wird der Dorn 12 in der zur Matrize 11 gleichachsigen Lage in die Matrize 11 eingefahren, um die in Station 2 in die Matrize 11 eingebrachte Materialportion zu einem Tubenkopf zu pressen, wobei dieser Tubenkopf an das Tubenrohr 16 und die Trennwand 15 an das Innere des Tubenkopfes und im Anschmelzbereich des Tubenrohres 16 an den Tubenkopf auch an das Innere des Tubenrohres 16 angeschmolzen wird. Durch nicht dargestellte Mittel wird der Dorn 12 in dieser Pressstellung gehalten, um darin zu verbleiben, wenn der Kniehebel 19 wieder zurückgezogen wird.

### Station 4

Der Dorn 12 verbleibt in der Pressstellung, damit der gepresste Tubenkopf mit angeschmolzenem Tubenrohr 16 und Trennwand 15 abkühlen und erhärten kann. Dazu werden Matrize 11 und Dorn 12 über nicht dargestellte Anschlüsse durch ein Kühlmittel gekühlt.

### Station 5

Der Dorn 12 bleibt zur Abkühlung weiterhin in der Pressstellung. In diese Station 5 kann bevorzugt eine induktiv wirkende Schweisseinrichtung 20 integriert sein, die die Flansche 45 nahe ihrer Längskanten der Trennwand 15 mit der inneren Oberfläche des Tubenrohres verbindet, d.h. verschweisst. Die Verschmelzung erfolgt, indem das Material, d.h. der Kunststoff nahe der Längskanten und eine diesen gegenüberliegende in Längsrichtung des Tubenrohres 16 verlaufende streifenförmige Zone aufgeschmolzen und vorzugsweise unter Druck in Eingriff d.h. aneinandergedrückt werden. Die Schweisseinrichtung 20 ist nicht auf dem Drehtisch 10, sondern wie die Ladevorrichtung 14 peripher getrennt zu letzteren angeordnet. Zur Vornahme einer Verschweissung fährt die Schweisseinrichtung 20 in Pfeilrichtung horizontal vor und überfährt anschliessend in vertikaler Richtung den Dorn 12 mit Tubenrohr 16 und Trennwand 15.

### Station 6

Durch eine Rückziehvorrichtung 21 wird der Dorn 12 in axialer Richtung aus der Matrize 11 ausgefahren und damit wird das aus Matrize 11 und Dorn 12 bestehende Presswerkzeug (Matrize 11 und Dorn 12) wieder geöffnet, nachdem das ein Gewinde am Tubenkopf formende Matrizenteil durch nicht gezeigte Mittel das geformte Gewinde freigesetzt hat, dies beispielsweise durch auseinanderfahren von Formbacken. Beim Weiterschalten von der Stellung 6 in die Stellung 7 wird der Dorn 12 mit Tubenrohr 16 angeformten Kopf und mit letzeren verbundener Trennwand 16 wieder in die horizontale Lage zurückgeschwenkt.

### Station 7

Durch eine dieser Station zugeordnete Aufschraubvorrichtung 23 wird ein Verschluss 24, d.h. eine Kappe 24 auf den Tubenkopf 22 aufgeschraubt, oder bei Steckkappen aufgestossen.

### Station 8

Die aus dem Tubenrohr 16, der Trennwand 15, dem Tubenkopf 22 und der Kappe 26 bestehende Tube ist nun fertiggestellt und wird in Pfeilrichtung 25 ausgeworfen oder durch eine nicht dargestellte Vorrichtung vom Dorn 12 abgezogen. Nach dem nächstfolgenden Taktschritt wird der Dorn 12 wieder mit einem Tubenrohr 16 und einer Trennwand 15 beladen.

Gemäss der in Fig. 1 dargestellten und vorgängig beschriebenen Vorrichtung umfasst das mit ihr ablaufende Verfahren acht Verfahrensschritte im Zusammenhang mit der Vorrichtung, Taktschritte eins bis acht genannt, wobei der Verfahrensschritt 7 (Aufbringung einer Kappe 24 auf den Tubenkopf 22) für die Durchführung des Verfahrens nach der Erfindung nicht zwingend ist. Obwohl im vorliegenden Ausführungsbeispiel acht Stationen, bei denen besagte acht Verfahrensschritte zur Umsetzung gelangen, angegeben sind, ist es auch möglich, die acht Verfahrensschritte auf eine andere Anzahl von Stationen, z.B. zehn Stationen zu verteilen. So könnte zwischen der Station acht und eins eine weitere Station mit einer Beladeeinrichtung vorgesehen sein, die den Dorn 12 vorgängig zur Beladung mit dem Tubenrohr 16 nur mit der Trennwand 15 bestückt. Ferner könnte eine weitere Station zwischen den Stationen 3 und 4, oder 4 und 5, oder 5 und 6 vorgesehen sein, an der die Trennwandlängsverschweissung vermittels der Schweisseinrichtung erfolgen könnte. Mit anderen Worten, alle im Zusammenhang mit Fig. 1 beschriebenen kombinierten Verfahrensschritte (Station 1, Beladung des Dornes 12 mit Trennwand 15 und nachfolgend mit Tubenrohr 16; Station 5, Kühlung des angeformten Kopfes 22 bei gleichzeitiger Längskantenverschweissung) lassen sich bei entsprechender Anpassung der Anzahl Stationen vereinzeln. Es können aber auch weniger als acht Stationen vorgesehen sein, wenn Funktionen zur Herstellung einer Mehrkammertube zusammengefasst werden.

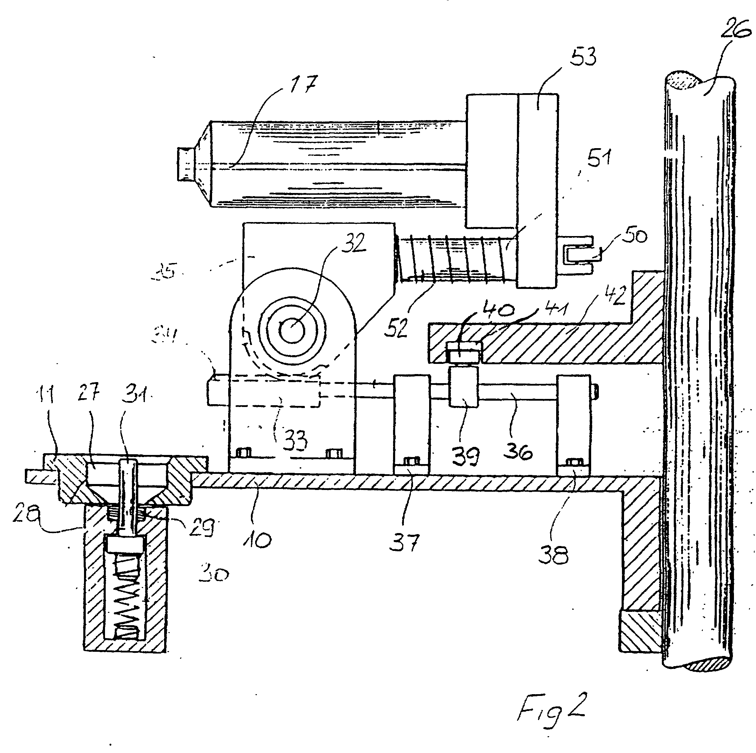

Fig. 2 zeigt den Drehtisch 10 mit einem der Werkzeuge teilweise im Schnitt in Schrittstellung 1, d.h. an Station 1 vor Beschickung des horizontal verlaufenden Dornes 12 mit Trennwand 15 und nachfolgend Tubenrohr 16. Mit 26 ist eine feststehende Welle bezeichnet, um welche der Drehtisch 10 drehbar gelagert und durch nicht gezeigte Mittel schrittweise antreibbar ist. In den Drehtisch 10 ist die den Formhohlraum 27 aufweisende Matrize 11 eingelassen und befestigt. Der Formhohlraum entspricht der äusseren Begrenzung des Tubenkopfes 22 (Fig. 1). Unterhalb der Matrize 11 und koaxial zu dieser befindet sich ein weiteres Matrizenteil 28, in welchem ein weiterer Formhohlraum 29 zur Bildung des Gewindes auf dem Tubenkopf 22 angeordnet ist. In dem weiteren Matrizenteil 28 ist ein durch eine Feder 30 in axialer Richtung belasteter Lochstempel 31 axial verschiebbar gelagert. Der Lochstempel 31 ist durch die Feder 30 in Richtung des Formhohlraumes 27 belastet und bei. Einführung des Dornes 12 in die Matrize 11 entgegen der Kraft der Feder 30 zurückgedrängt. Der Lochstempel 31 dient zur Freihaltung der Tubenöffnung beim Pressen des Tubenkopfes 22. Das Matrizenteil 28 ist um eine weitere Achse drehbar, um das Gewinde des fertiggepressten Tubenkopfes freigeben zu können. Es wird hierzu durch nicht dargestellte Mittel gedreht, oder an Stelle einer Drehung durch andere (nicht gezeigte) Mittel geöffnet.

Der Dorn 12 ist um eine Achse 32 schwenkbar angeordnet. Zum Schwenken dient eine Schwenkeinrichtung beispielsweise umfassend eine Zahnstange 33, welche mit ihren Zähnen in die Verzahnung eines Schwenkteiles 35 eingreift. Die Zahnstange 33 ist mit einem Stössel 36 verbunden, welcher in zwei auf dem Drehtisch 10 befestigten Lagerböcken 37, 38 axial verschiebbar gelagert ist. Zwischen den Lagerböcken 37, 38 ist der Stössel 36 mit einem Mitnehmer 39 starr verbunden, welcher eine Führungsrolle 40 aufweist, die in einer Führungsnut 41 einer wie die Welle 26 feststehenden Kurvenscheibe 42 geführt ist. Die Führungsnut 41 hat in der Kurvenscheibe 42 einen derartigen Verlauf, dass der Mitnehmer 39 zwischen den Lagerböcken 37, 38 hin und her bewegt wird, wodurch der Dorn 11 über die beschriebenen Mittel in vertikale oder horizontale Lage geschwenkt wird.

Der in Fig. 2 dargestellte Dorn 12 ist an seinem vorderen freien Ende 43 so ausgestaltet, dass das freie Ende 43 die innere Kontur eines Tubenkopfes 22 bilden kann. Dabei bildet der Ansatz 43a die Durchflussöffnung des Ausgusses des Tubenkopfes 22 während die sich daran anschliessende Schräge 43b die innere Fläche der Schulter des Tubenkopfes 22 formt.

Zur Aufnahme einer Trennwand 15 durchgreift ein Schlitz 44 in axialer Richtung den Dorn 12 und zwar ausgehend von der vorderen freien Stirnfläche des Ansatzes 43a in einer Erstreckung, die der Länge einer Trennwand 15 entspricht. In diesem Schlitz 44 wird die Trennwand 15 durch die Ladevorrichtung 14 eingeschoben.

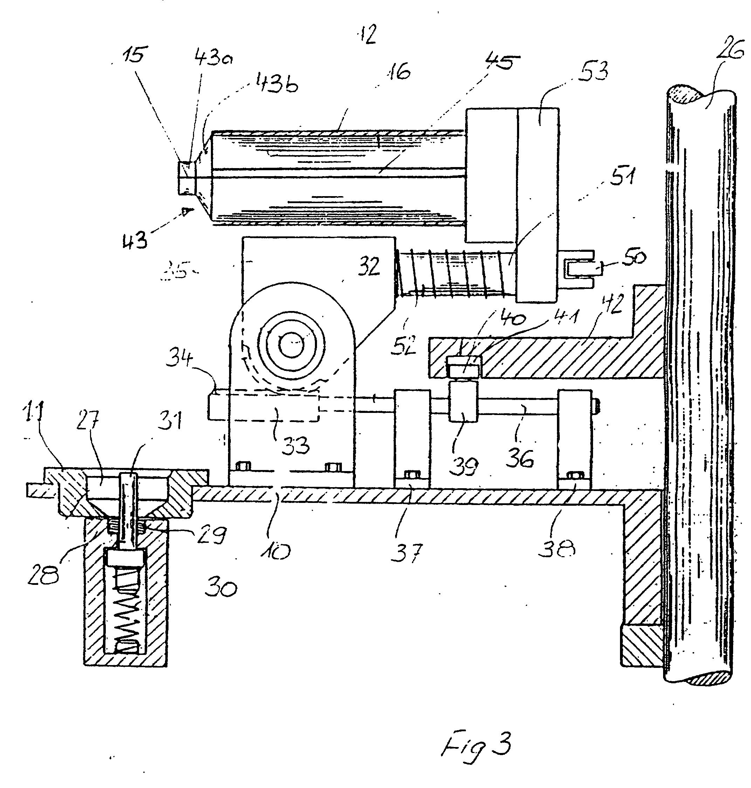

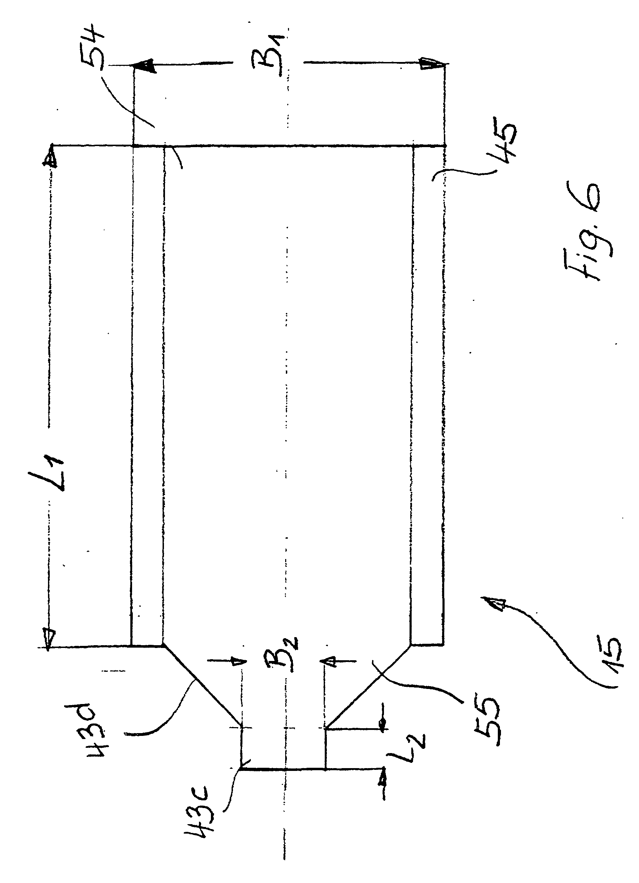

Fig. 3 zeigt den Drehtisch 10 mit einem der Werkzeuge teilweise im Schnitt in Schrittstellung 1, d.h. in Station 1 im Gegensatz zu Fig. 2 jedoch nach der Beschickung des nach wie vor horizontal liegenden Dornes 12 mit einer Trennwand 15 und einem Tubenrohr 16. Der Zuschnitt (Fig. 6) einer Trennwand 15 ist so vorgenommen, dass er einends in seiner äusseren Formgebung dem vorderen freien Ende 43 des Dornes 12, und daran anschliessend in seiner Breite mindestens dem halben Umfang des Dornes und in seiner Länge der Länge einer Tube vorzugsweise ausgehend vom vorderen freien! Ende des Ansatzes 43a entspricht, wobei der beidseitige Ueberstand der Trennwand an den Dorn angelegt ist. Damit ist die Trennwand 15 vollständig und bezüglich der Ueberstände konturgleich zur Oberfläche des Dornes 12 im Dorn 12 aufgenommen. Die konturgleiche und massgleiche Bemessung des Kopfteiles der Trennwand 15 und deren Aufnahme im Dorn 12 ist ausreichend, die äusseren Kanten des vorderen Endes der Trennwand 15 (Kopfteil) mit der inneren Oberfläche der Ausgussöffnung und der Innenfläche der Schulter des Kopfes 22 bei Bildung des Kopfes 22 mit letzterem zu verschmelzen. Gleichermassen ist die Bemessung der sich an das vordere freie Ende der Trennwand 15 anschliessenden Längsseiten der Trennwand 15 ausreichend, mit der inneren Oberfläche des Rohres 22 zu verbinden, und zwar so zu verbinden, dass die Trennwand 15 bei Flachdrücken der Tube der Breite der Tube entspricht. Die Flansche 45 werden also so angeschweisst, dass jeder Flansch 45 für die Trennwand 15 eine Vorrats- oder Ausgleichsfläche bildet, um den Trennwandflächen-Mehrbedarf bei Flachdrücken der Tube zu befriedigen.

In Fig. 6 sind die Ueberstände der Trennwand als Flansche 45 bezeichnet, die eine streifenförmige Längsnaht-Verschweissung gestatten. Diese Flansche sind beidseits der Trennwand 15 (entsprechend dem Dorndurchmesser) abgebogen, liegen an der inneren Oberfläche des Tubenrohres 22 an und weisen jeweils eine Breite gebildet aus der Hälfte der Differenz zwischen dem halben Umfang der Tube und dem Dorndurchmesser auf, vorzugsweise vergrössert um 5% bis 25%, vorzugsweise 8% bis 12% der Breite. In Fig. 3 sind gleiche Teile wie in Fig. 2 mit gleichen Bezugszahlen gekennzeichnet.

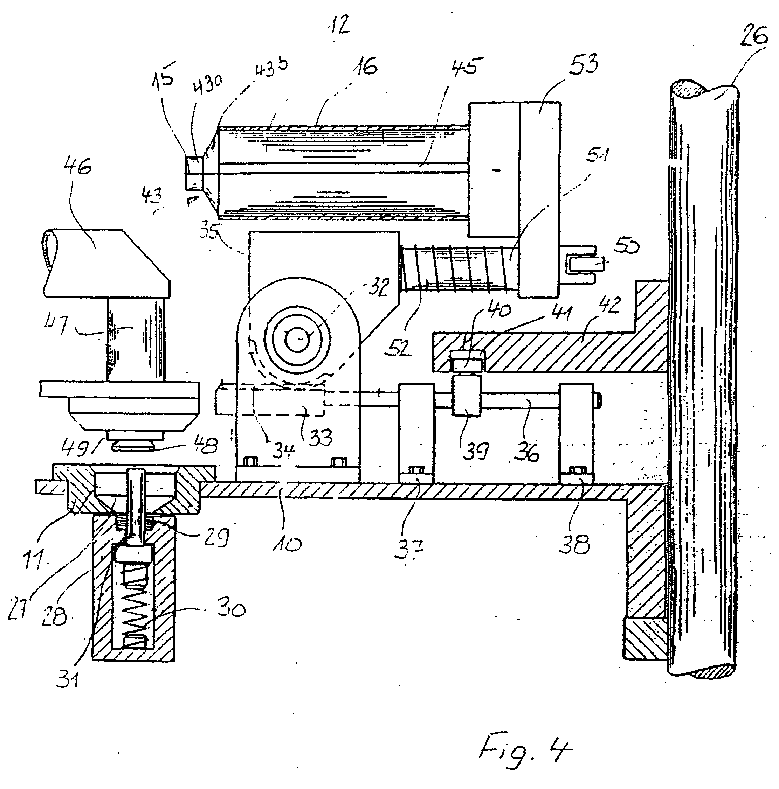

Fig. 4 zeigt den Drehtisch 10 mit einem der Werkzeuge teilweise im Schnitt in Schrittstellung 2, d.h. an Station 2 mit beschicktem horizontal liegendem Dorn 12 und nach oben offener Matrize 11 unterhalb eines Extruders 46 als Befüllvorrichtung. Der Extruder 46 ist ortsfest der Station 2 zugeordnet. Er weist ein Rohrteil 47 auf, in dem sich ein Schliesskörper 48 befindet. Der Schliesskörper 48 ist als Ventilkegel ausgebildet und durch nicht dargestellte Mittel zum Öffnen und Schliessen in axialer Richtung verschiebbar angeordnet. Das Rohrteil 47 ist von einer Ringdüse 49 umgeben, die zur Erzeugung eines Gasstromes bestimmt ist. Zur Befüllung der Matrize 11 extrudiert der Extruder 46 eine Materialportion (nicht gezeigt) plastifizierten Kunststoffes.

Der aus dem Rohrteil 47 den Schliesskörper 48 anströmende Kunststoffstrom wird durch den Schliesskörper 48 zu einem Ring, d.h. einer ringförmigen Materialportion, runden bis linsenförmigen Querschnittes, geformt. Durch Schliessen des Schliesskörpers 48 wird die Portion vom Extruder abgetrennt und fällt in freiem Fall in den Formhohlraum der Matrize oder auf eine Formplatte (nicht gezeigt) zum Einfahren der Portion. Vermittels der Ringdüse 49 kann auf die Portion ein Gasstrom aufgebracht werden, der die Trennung der Materialportion vom Extruder bei in Schliessstellung gefahrenen Schliesskörper 48 unterstützt. Diese Art Beschickungen haben sich als vorteilhaft erwiesen, da mit ihr nach Befüllung der Matrize 11 und vor Einsetzen des Pressvorganges örtlich begrenzte Kristallisierungen des plastifizierten Kunststoffes vermeiden lassen, die anderenfalls zu Defekten des geformten Kopfes 22, der Anformung des Rohres 16 an den Kopf 22 oder der Verbindung der Trennwand 15 mit dem Kopf 22 führen können. Im übrigen sind in Fig. 4 gleiche Teile wie in Fig. 2 und 3 mit gleichem Bezugszeichen gekennzeichnet.

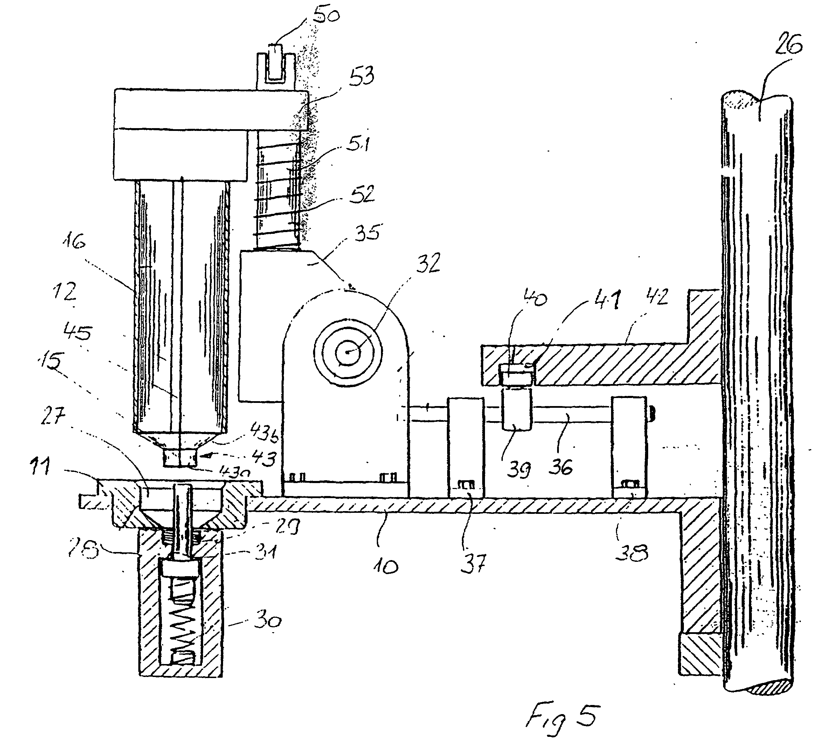

Fig. 5 zeigt den Drehtisch 10 mit einem der Werkzeuge teilweise im Schnitt in Schrittstellung 3, d.h. an Station 3. Der beladene Dorn 12 ist um 90° zur Horizontalen geschwenkt und in dieser Stellung zur Einfahrt in die befüllte Matrize ausgerichtet. Die Einfahrbewegung des Dornes 12 in die Matrize 11 wird ausgelöst durch einen Kniehebel 19 (siehe auch Station 3 in Fig. 1) der auf eine Rolle 50 eines im Schwenkteil 35 axial geführten Schaftes 51 drückt und letzteren im Schwenkteil 35 gegen die Kraft der Feder 52 in Richtung auf die Matrize 11 verschiebt. An den Schaft 51 ist vermittels eines Dornträgers 53 der Dorn 11 angeordnet, so dass bei Verschiebung des Schaftes 51 der beladene Dorn 12 in die Matrize 11, den Pressvorgang vorziehend einfährt. Auch in Fig. 5 sind gleiche Teile wie in Fig. 2, 3 und 4 mit gleichem Bezugszeichen versehen.

Fig. 6 zeigt eine Trennwand 15 in der Draufsicht. Die Trennwand 15 umfasst ein im wesentlichen rechteckiges erstes Teilstück 54, das in seiner Breite B1 bei einer Zweikammertube gleicher Kammerabmessungen im wesentlichen dem Durchmesser einer Tube plus die der Ueberstände (Flansche 45), und in seiner Länge L1 im wesentlichen der Länge des Tubenrohres 16 entspricht. An dieses Teilstück 54 schliesst sich einends ein zweites Teilstück 55 an, das in seiner Formgebung im wesentlichen der inneren Form eines Tubenkopfes entspricht. So korrespondiert der Ansatz 43c mit der Bemessung des Ansatzes 43a und die Schräge 43d mit der der Schräge 43b, Ansatz 43a und 43b sind Formflächen des vorderen freien Endes 43 des Dornes 12 (Fig. 3). Die Länge L2 des Ansatzes 43c entspricht im wesentlichen der Länge einer Ausgussöffnung, während die Breite B2 deren Durchmesser entspricht. In den Schlitz 17 eines Dornes 12 eingeschoben liegt die dem Teilstück 55 gegenüberliegende Seite der Trennwand 15 am Schlitzende an, während die Flansche 45 der Trennwand 15 im wesentlichen durch Anformung an der Oberfläche des Dornes 12 anliegen.

Mit Anwendung von Flanschen 45 verbreitert um die genannten Werte und Anbringung der Schweissnähte nahe ihrer Längskanten sind zwischen Flansch 45 und Tubenrohr 16 breitere und damit belastbarere Schweissnähte ausbildbar als dies mit der Verschweissung nicht verbreiterter Flansche bei gleicher Schweissnahtlage möglich wäre. Zum Einbau in eine Tube, d.h. in ein Tubenrohr 16 sind die Flansche 45 vorzugsweise in einer Drehrichtüng entlang den Längskanten des Teilstückes 16 so abgebogen, dass sie bei Einschieben der Trennwand 15 in den Schlitz 17 des Dornes 12 an der äusseren Oberfläche des Dornes 12 anliegen, so dass das Tubenrohr 16 die Flansche 45 überfahrend auf den Dorn 12 aufgebracht werden kann. Während die Trennwand 15 im Dorn 12 aufgenommen ist, befinden sich die Flansche 45 zwischen äusserer Oberfläche des Dornes 12 und innerer Oberfläche des Tubenrohres 16. Vorgesehen ist beispielsweise, die Verschweissung an einer Abkühlstation für den Kopf 22 mit angeschmolzenem zweiten Teilstück 55 vorzunehmen. Die Verschweissung erfolgt durch induktiv erzeugte Wärmeentwicklung und Aufschmelzung des Rohr- und Flanschwerkstoffes in streifenform bei gleichzeitiger oder anschliessender Verpressung der Streifen. Zu diesem Zweck sind bei Schweisseinrichtungen die Aufheizeinrichtungen mit Presseinrichtungen kombiniert oder letztere sind Aufheizeinrichtungen nachgeordnet, wobei Kühleinrichtungen nachfolgend vorgesehen sein können, beispielsweise durch Anblasen der Nähte mit Luft. Entwickeln die Flansche 45 beispielsweise bei Erwärmung eine gewisse Rückstellkraft, d.h. drücken sie von sich aus auf die innere Oberfläche des Tubenrohres 16, so kann dies ausreichend sein, zur Herstellung einer Schweissnaht den Pressvorgang vermittels gesondertem Werkzeug dahinfallen zu lassen. Auf Grund der Abbiegung der Flansche 45 zur Anlage an den Dorn 12 im Uhrzeiger- oder entgegen dem Uhrzeigersinn zufolge ihrer Breitenbemessung und der vorgesehenen Schweissnahtlage (nahe der Längskanten der Flansche) ergibt sich, dass die Schweissnähte - wieder im Sinn der Abbiegungsrichtung-beidseits unter einem Winkel zum Schlitz 17 zur Aufnahme der Trennwand 15 bzw. zur Längsachse des Dornes 12 stehen. Für die Funktionssicherheit von Tuben hat sich als vorteilhaft erwiesen, wenn die beidseitigen Winkel gleich gross mit einer Abweichung von höchstens 0,5 Grad bis 1,5 Grad, vorzugsweise 0,6 bis 0,9 Grad, ausgebildet sind.

Als Werkstoffe zur Herstellung der Tubenrohre kommen Kunststoff-Monofolien (Folien einschichtig aus einem Kunststoff bestehend), Kunststoff-Laminatfolien (Folien aus mindestens zwei Kunststoffschichten) oder Metallaminatfolien (Metallfolie beidseits kaschiert mit einer oder mehreren Kunststoffolien) in Betracht. Die äusseren Schichten sind bei Kunststoff- und Metallaminatfolien meist aus Polyethylen, die sich gut gegeneinander verschweissen lassen. Polyethylen eignet sich aus zum Anformen des Kopfes 22 an ein Ende des Tubenrohres 16, da sich Polyethylen gleichermassen gut zum Spritz- wie Pressformen eignet. Bei der Materialwahl für das Tubenrohr ist auf seine Diffusionsresistenz bei höherwertigen Packgütern zu achten. Zur Erfüllung dieses Erfordernisses kann der Kopf aussen und / oder innen mit einer Sperrschicht belegt sein. Bevorzugt besteht die Trennwand 15 aus einem Kunststoff, der mit dem Kunststoff der inneren Oberfläche des Tubenrohres 16 gut verschweissbar ist. Beispielsweise besteht die innere Oberfläche des Rohres 16 aus Polyethylen, so ist vorteilhaft, wenn auch die Trennwand aus einer Polyethylen-Folie besteht.. Ist eine Diffusion besonderer Packstoffkomponenten von einer Tubenkammer in die andere zu unterdrücken, kann die Trennwand auch aus einem diffusionsresisten Material, z.B. einem Metallaminat gefertigt sein. Vorzugsweise werden für die genannten Zwecke solche mit einer Dicke von 250µ bis 350µ vorzugsweise 290µ bis 310µ verwendet.

Das erfindungsgemässe Verfahren zur Herstellung einer Mehrkammertübe läuft in vorstehend beispielhalber beschriebener Vorrichtung folgendermassen ab. In Station 1 belädt die Ladevorrichtung 14 den Dorn 12 zuerst mit einer Trennwand 15 und anschliessend mit einem Tubenrohr 16. Die Trennwand 15 wird beim Beladevorgang in den Schlitz 17 des Dornes 12 eingebracht, woraufhin das Tubenrohr 16 über den Dorn 12 geschoben wird. Nach erfolgtem Beladevorgang wird die Matrize 11 des Werkzeuges in Station 2 mit plastifiziertem Kunststoff in einer Menge befüllt, die der zur Bildung des Tubenkopfes 22 notwendigen Materialmenge entspricht. In Station 3 wird der Pressvorgang zur Bildung des Kopfes 22 durch Einfahren des Dornes 12 in die Matrize 11 vollzogen, gleichzeitig wird ein vorderes Ende des Tubenrohres 16 an den äusseren Umfang des Kopfes 22 und das Teilstück 55 (d.h. das in das Innere des Kopfes hineinragende Ende der Trennwand 15) an das Innere des Tubenkopfes 22 angeschmolzen. Mit dieser Massnahme ist nicht nur der Schulterraum des Kopfes sondern auch die Ausgussöffnung des Ausgusses des Kopfes 22 vermittels einer Wandung geteilt. Nach der Pressformung erfolgt die Abkühlung des Kopfes mit angeschmolzenem Trennwandende (Teilstück 55). Die Abkühlung kann über mehrere Stationen erfolgen. Die Abkühlungszeit wird benutzt, um die Trennwand 15 vermittels der Flansche 45 in Längsrichtung mit dem inneren Umfang des Tubenrohres 16 zu verschweissen. Grundsätzlich stellt das erfindungsgemässe Verfahren neben den erfindungsgemässen Verfahrensschritten darauf ab, die Abkühlzeit zu nutzen
1.) für den Beladevorgang des Dornes 12 mit der Trennwand 15 und
2.) für den Vorgang der Verschweissung der Trennwand 15 mit dem Tubenrohr 16 zu nutzen, so dass die gesamte Fertigungszeit für eine Tube nicht verlängert wird.

Nach erfolgter Abkühlung und Verschweissung beispielsweise in einer Station 5 wird in einer folgenden Station 6 das Werkzeug aufgefahren und der Dorn 12 mit darauf sitzender Tube in eine Lage gebracht, dass auf den Kopf 22 der Tube vermittels einer Aufschraubeinrichtung 23 eine Verschlusskappe 24, beispielsweise in einer Station 7, aufgebracht werden kann. Danach wird in einer Station 8 der Dorn 12 von der Tube entladen und anschliessend ruckt das Werkzeug wieder in Station 1, d.h. in die Ausgangstation zur Beladung des Dornes 12 ein.

Das erfindungsgemässe Verfahren wurde im Zusammenhang mit vorstehend beschriebener Vorrichtung beispielshalber erläutert. Die Durchführung des Verfahrens nach der Erfindung ist jedoch auf diese Vorrichtung nicht beschränkt. Zur Durchführung des Verfahrens nach der Erfindung ist grundsätzlich jede Vorrichtung geeignet, solange mit ihr die beanspruchten Verfahrensschritte in der beanspruchten Reihenfolge durchführbar sind.

## Patentansprüche

1. Verfahren zur Herstellung einer Mehrkammer-Verpackungstube aus Kunststoff, die Tube bestehend aus einem Tubenrohr, einem Tubenkopf und mindestens einer im Tubenrohr aufgenommenen Trennwand, bei dem der Tubenkopf vermittels eines Werkzeuges, umfassend eine Matrize und Dorn als Werkzeughälften durch Formgebung einer Kunststoff-Materialportion gebildet und gleichzeitig an das Tubenrohr angeformt wird, gekennzeichnet durch folgende Verfahrensschritte
(a) Beschickung des Domes mit der Trennwand;
(b) Aufbringung des Tubenrohres auf den mit der Trennwand beschickten Dorn;
(c) Verschmelzen der Kanten eines zweiten Teilstückes der Trennwand mit der inneren Oberfläche des Tubenkopfes;
(d) Verschweissen der Längskanten eines ersten Teilstückes der Trennwand mit der inneren Oberfläche des Tubenrohres.

2. Verfahren nach Anspruch 1, dadurch gekennzeichnet, dass die Trennwand in einen Schlitz des Dornes eingebracht wird.

3. Verfahren nach Anspruch 1 oder 2, dadurch gekennzeichnet, dass die Trennwand mit ihren Flanschen an den Umfang des Dornes angeformt in den Dorn eingebracht wird.

4. Verfahren nach Anspruch 3, dadurch gekennzeichnet, dass die Flansche einander in Uhrzeiger-Richtung oder entgegengesetzt zur Uhrzeiger-Richtung folgend an den Dorn angeformt werden.

5. Verfahren nach einem der Ansprüche 1 bis 4, dadurch gekennzeichnet, dass das Tubenrohr die Flansche der Trennwand engbeabstandet überfahrend auf den Dorn aufgebracht wird.

6. Verfahren nach einem der Ansprüche 1 bis 5, dadurch gekennzeichnet, dass ein zweites Teilstück der Trennwand mit der inneren Oberfläche einer Schulter und eines Ausgusses des Tubenkopfes bei dessen Bildung verschmolzen wird.

7. Verfahren nach einem der Ansprüche 1 bis 6, dadurch gekennzeichnet, dass das erste Teilstück der Trennwand vermittels der Flansche mit der inneren Oberfläche des Tubenrohres verschweisst wird.

8. Verfahren nach Anspruch 7, dadurch. gekennzeichnet, dass die Verschweissung der Flansche nahe ihrer Längskanten vermittels einer streifenförmigen Längsnaht erfolgt.

9. Verfahren nach Anspruch 8, dadurch gekennzeichnet, dass zur Bildung der Längsnähte jeweils ein Streifen entlang dem Tubenrohr und ihm gegenüberliegend entlang dem Flansch aufgeschmolzen und in aufgeschmolzenem Zustand verpresst werden.

10. Verfahren nach Anspruch 9, dadurch gekennzeichnet, dass die Aufschmelzung induktiv vogenommen wird.

11. Verfahren nach Anspruch 9, dadurch gekennzeichnet, dass die Verpressung durch eine Rückstellkraft der Flansche erfolgt.

12. Verfahren nach Anspruch 9, dadurch gekennzeichnet, dass die Verpressung durch ein Presswerkzeug erfolgt.

13. Verfahren nach einem der Ansprüche 8 bis 12, dadurch gekennzeichnet, dass nach erfolgter Verpressung die Längsnähte gekühlt werden.

14. Verfahren nach einem der Ansprüche 1 bis 13, dadurch gekennzeichnet, dass die Formgebung des Kopfes mit Anschmelzen des Tubenrohres durch Pressformen vorgenommen wird.

15. Verfahren nach einem der Ansprüche 1 bis 13, dadurch gekennzeichnet, dass die Formgebung des Kopfes mit Anschmelzen des Tubenrohres durch Spritzgiessen erfolgt.

## Claims

1. Process for the production of a multi-chamber packaging tube made of plastic, the tube consisting of a tube pipe, a tube head, and at least one partition housed in the tube pipe, in which the tube head is formed by means of a die, comprising a matrix and a mandrel as die halves, by molding a portion of plastic material, and, at the same time, attached to the tube pipe,
characterized by the following process steps:
(a) charging the mandrel with the partition;
(b) applying the tube pipe to the mandrel which has been charged with the partition;
(c) melting the edges of a second partial piece of the partition together with the inside surface of the tube head;
(d) bonding the lengthwise edges of a first partial piece of the partition to the inside surface of the tube pipe.

2. Process according to Claim 1, characterized in that the partition is introduced into a slit of the mandrel.

3. Process according to Claim 1 or 2, characterized in that the partition is introduced into the mandrel with its flanges molded onto the circumference of the mandrel.

4. Process according to Claim 3, characterized in that the flanges are molded onto the mandrel following one another in the clockwise direction or counter-clockwise direction.

5. Process according to one of Claims 1 to 4, characterized in that the tube pipe is placed onto the mandrel, moving over the flanges of the partition in close proximity.

6. Process according to one of Claims 1 to 5, characterized in that a second partial piece of the partition is melted together with the inside surface of a shoulder and an outlet of the tube head, as the latter is formed.

7. Process according to one of Claims 1 to 6, characterized in that the first partial piece of the partition is bonded to the inside surface of the tube pipe by means of the flanges.

8. Process according to Claim 7, characterized in that bonding of the flanges takes place near their lengthwise edges, by means of a strip-shaped lengthwise seam.

9. Process according to Claim 8, characterized in that to form the lengthwise seams, a strip along the tube pipe and, opposite to it, a strip along the flange, are melted and pressed together in the melted state.

10. Process according to Claim 9, characterized in that melting is performed inductively.

11. Process according to Claim 9, characterized in that pressing takes place by means of the elastic memory of the flange.

12. Process according to Claim 9, characterized in that pressing takes place by means of a pressing tool.

13. Process according to one of Claims 8 to 12,
characterized in that after pressing has taken place, the lengthwise seams are cooled.

14. Process according to one of Claims 1 to 13,
characterized in that shaping of the head, together with attachment of the tube, is carried out by means of extrusion die molding.

15. Process according to one of Claims 1 to 13,
characterized in that shaping of the head, together with attachment of the tube, is carried out by means of injection molding.

## Revendications

1. Procédé de fabrication d'un tube d'emballage à chambres multiples en matière plastique, le tube se composant d'un tuyau de tube, d'une tête de tube et au moins d'une paroi de séparation contenue dans le tuyau du tube procédé dans lequel la tête du cube est constituée et en même temps formée sur le tuyau du tube, par formage d'une partie de la matière plastique, au moyen d'un outil comprenant une matrice et un mandrin servant de moitiés d'outil, caractérisé par les étapes suivantes du procédé consistant :
(a) à charger le mandrin avec la paroi de séparation ;
(b) à appliquer le tuyau du tube sur le mandrin chargé de la paroi de séparation ;
(c) à procéder à la fusion des bords d'une seconde partie de la paroi de séparation, avec la surface intérieure de la tête du tube ;
(d) à souder les bords longitudinaux d'une première partie de la paroi de séparation, avec la surface intérieure du tuyau du tube.

2. Procédé selon la revendication 1, caractérisé en ce que la paroi de séparation est introduite dans une fente du mandrin.

3. Procédé selon la revendication 1 ou 2, caractérisé en ce que la paroi de séparation, avec ses brides, est introduite dans le mandrin sur la périphérie duquel sont formées les brides.

4. Procédé selon la revendication 3, caratérisé en ce que les brides sont formées successivement sur le mandrin dans le sens des aiguilles d'une montre ou dans le sens inverse des aiguilles d'une montre.

5. Procédé selon l'une quelconque des revendications 1 à 4, caractérisé en ce que le tuyau du tube est placé sur le mandrin en dépassant de peu des brides de la paroi de séparation.

6. procédé selon l'une quelconque des revendications 1 à 5, caractérisé en ce qu'une seconde partie de la paroi de séparation est jointe par fusion, lors de sa formation, avec la surface intérieure d'un épaulement et d'un bec de la tête du tube.

7. Procédé selon l'une quelconque des revendications 1 à 6, caractérisé en ce que la première partie de la paroi de séparation est soudée, au moyen des brides, à la surface intérieure du tuyau du tube.

8. Procédé selon la revendication 7, caractérisé en ce que le soudage des brides a lieu à proximité de leurs bords longitudinaux, au moyen d'une soudure longitudinale en forme de bande.

9. procédé selon la revendication 8, caractérisé en ce que, pour former les soudures longitudinales, une bande est, a chaque fois, appliquée en fusion et comprimée à l'état de fusion le long du tuyau du tube et le long de la bride placée en face de la bande.

10. Procédé selon la revendication 9, caractérisé en ce que l'application en fusion se produit de manière inductive.

11. Procédé selon la revendication 9, caractérisé en ce que l'injection sous pression se produit sous l'effet d'une force de rappel des brides.

12. procédé selon la revendication 9, caractérisé en ce que l'injection sous pression, est réalisée par un outil de moulage par compression.

13. Procédé selon l'une quelconque des revendications 8 à 12, caractérisé en ce que, après réalisation de l'injection sous pression, les soudures longitudinales sont refroidies.

14. Procédé selon l'une quelconque des revendications 1 à 13. caractérisé en ce que le formage de la tête, associé à une application par fusion du tuyau du tube est réalisé par moulage effectué par compression.

15. Procédé selon l'une quelconque des revendications 1 à 13, caractérisé en ce que le formage de la tête, associé à une application par fusion du tuyau du tube, est réalisé par moulage effectué par injection.
